# EUROPÄISCHE PATENTSCHRIFT

(11) **EP 1 430 227 B1**
(45) Veröffentlichungstag und Bekanntmachung des Hinweises auf die Patenterteilung: **17.08.2005**
(21) Anmeldenummer: 02800011.5
(22) Anmeldetag: 25.09.2002
(51) Int. Cl.: F16B 25/10

(54) **SELBSTBOHRENDE SCHRAUBE**
SELF-TAPPING SCREW
VIS AUTOPERCEUSE

(30) Priorität: 27.09.2001 DE 10147767
(43) Veröffentlichungstag der Anmeldung: 23.06.2004
(73) Patentinhaber: SFS intec Holding AG, 9435 Heerbrugg (CH)
(72) Erfinder: PALM, Erich, CH-9434 Au (CH)
(86) Internationale Anmeldenummer: PCT/EP2002/010749
(87) Internationale Veröffentlichungsnummer: WO 2003/029664

(56) Entgegenhaltungen:
- EP-A- 0 049 218
- EP-A- 0 949 218
- FR-A- 2 735 191
- US-A- 3 044 341

## Beschreibung

Die Erfindung betrifft eine selbstbohrende Schraube mit einem Bohrteil und einem mit Gewinde versehenen Schaft zur Befestigung eines plattenförmigen Gegenstands auf einem Unterbau, wobei die Schraube so ausgebildet ist, daß sie in dem plattenförmigen Gegenstand ein Durchgangsloch herstellt, das den mit Gewinde versehenen Schaft mit Spiel aufnimmt, und daß sie in dem Unterbau eine Bohrung herstellt, in die das Gewinde des Schaftes ein Gegengewinde schneidet.

Bei dem Herstellen einer Gebäudeverkleidung werden üblicherweise Verkleidungsplatten mittels Schrauben auf einem mit dem Gebäude fest verbundenen Unterbau befestigt. Die Verkleidungsplatten bestehen beispielsweise aus Keramik, Faserzement, Stein od. dgl. sprödem Material. Der Unterbau besteht üblicherweise aus Metall, häufig aus Profilteilen aus dünnem Blech. Die Gebäudeverkleidung ist großen Temperaturschwankungen ausgesetzt. Bei Sonneneinstrahlung dehnt sich die Gebäudeverkleidung gegenüber dem Unterbau, der durch die Gebäudeverkleidung verdeckt ist, stark aus, um sich anschließend, bei nachlassender Sonneneinstrahlung, wieder zusammenzuziehen. Die Gebäudeverkleidung wandert so auf dem Unterbau. Zur Vermeidung von thermischen Spannungen in der Gebäudeverkleidung darf diese durch die Befestigungsschrauben nicht an ihrer Wanderungsbewegung gehindert werden. Zu diesem Zweck werden in den Verkleidungsplatten Durchgangsbohrungen verwendet, welche die Befestigungsschrauben mit ausreichendem Spiel aufnehmen. In dem Unterbau selbst werden Gewindebohrungen hergestellt, in die die Befestigungsschrauben eingeschraubt werden.

Bei kleineren Gebäudeverkleidungen können die Durchgangsbohrungen in den Verkleidungsplatten und die Gewindebohrungen in dem Unterbau durch Bohren bzw. Vorbohren und anschließendes Gewindeschneiden manuell auf der Baustelle hergestellt werden. Bei größeren Gebäudeverkleidungen werden zu diesem Zweck selbstbohrende Schrauben eingesetzt, die einen Bohrteil und einen mit Schneidgewinde versehenen Schaft haben. Die selbstbohrenden Schrauben sind dabei so ausgebildet, daß sie selbst in dem plattenförmigen Gegenstand ein Durchgangsloch herstellen, das den mit Gewinde versehenen Schaft mit Spiel aufnimmt, und daß sie selbst in dem Unterbau eine Bohrung herstellen, in die das Gewinde des Schaftes ein Gegengewinde schneidet. Dafür geeignet ist eine selbstbohrende Schraube der eingangs genannten Art, wie sie aus der EP 0 049 218 B1 bekannt ist. Bei dieser Schraube schließen an einen plättchenförmigen Bohrteil mit axialem Abstand von der Bohrspitze quer zur Schraubenachse frei auskragende Flügel an, deren der Bohrspitze zugewandte Begrenzung als Bohrschneide ausgebildet ist. An der Anschlußstelle der Flügel an dem Bohrteil ist eine annähernd parallel zur Schraubenachse verlaufende Sollbruchkerbe vorgesehen. Die Bohrspitze des Bohrteils bohrt zuerst in einer auf einem Unterbau zu befestigendem Abdeckbahn aus Leichtmetall ein Loch vor, das anschließend durch die Bohrflügel zu einem die Schraube mit Spiel aufnehmenden Durchgangsloch aufgeweitet wird. Anschließend dringt der Bohrteil mit der Bohrspitze in den Unterbau ein, wobei nach dem Durchtritt des Bohrteils die Flügel an dem Unterbau zur Anlage kommen und an den Sollbruchkerben abbrechen. Bei weiterem Eindrehen der Schraube gelangt dann der Gewindeteil des Schaftes in die in dem Unterbau hergestellte Bohrung, so daß in diese ein Gewinde geschnitten werden und die endgültige Befestigung erfolgen kann. Bei dem Einsatz von solchen selbstbohrenden Schrauben bei dem Herstellen einer Gebäudeverkleidung auf einem Unterbau aus dünnen Blechprofilen hat sich gezeigt, daß häufig das durch den dünnen Blechunterbau auf die Flügel ausgeübte Drehmoment nicht ausreicht, um diese abzubrechen. Folge ist, daß die Flügel auch die Bohrung in dem Unterbau durchdringen und aufweiten, so daß das Gewinde des Schaftes anschließend darin keinen Halt mehr findet.

Aufgabe der Erfindung ist es, eine selbstbohrende Schraube der eingangs genannten Art so auszubilden, daß ein den Schaft der Schraube mit Spiel aufnehmendes Durchgangsloch nur in dem plattenförmigen Gegenstand und nicht in einem dünnen, vorzugsweise metallischen Unterbau hergestellt wird.

Diese Aufgabe ist erfindungsgemäß durch eine selbstbohrende Schraube der eingangs genannten Art gelöst, bei der der Bohrteil eine in bezug auf eine Längsachse der Schraube außermittig angeordnete Bohrspitze hat.

Die außermittige Anordnung der Bohrspitze der erfindungsgemäßen Schraube bewirkt, daß sich die Schraube bei dem Durchbohren des plattenförmigen Gegenstands in diesem mittels der Bohrspitze zentriert und daß die Längsachse der Schraube während des Bohrvorganges mit einer Mittelachse der Bohrung einen Winkel einschließt, so daß wenigstens ein Teil des Bohrteils bei zentrierter Bohrspitze eine Kreisbewegung um die Mittelachse der Bohrung ausführt und so eine aufgeweitete Durchgangsbohrung herstellt, deren Durchmesser in der Höhe über der Längsmittelachse der Bohrung zwar variiert, aber bis zu dem Zweifachen des Durchmessers des Bohrteils betragen kann, je nach dem, wie weit die Bohrspitze in bezug auf die Längsachse der Schraube außermittig ist. Wenn die Bohrspitze des Bohrteils den vorzugsweise metallischen Unterbau durchdringt und an dessen Unterseite zunehmend hervortritt, nimmt die Zentrierwirkung der Bohrspitze zunehmend ab. Die Bohrspitze selbst macht dann die Kreisbewegung um die Mittelachse der Bohrung mit, die aber mit zunehmendem Bohrfortschritt abnimmt; weil sich der zwischen der Längsachse der Schraube und der Mittelachse der Bohrung eingeschlossene Winkel ständig verkleinert. Wenn beide Achsen schließlich zusammenfallen, führt der Bohrteil nur noch eine Drehbewegung um die Längsachse der Schraube aus und stellt die Bohrung in dem Unterbau mit einem Durchmesser her, der gleich dem Durchmesser des Bohrteils ist.

Vorteilhafte Ausgestaltungen der Erfindung bilden die Gegenstände der Unteransprüche.

Wenn in einer Ausgestaltung der selbstbohrenden Schraube nach der Erfindung die Bohrspitze an einem radial äußeren Rand des Bohrteils angeordnet ist, führt der gesamte Bohrteil die oben genannte Kreisbewegung aus, so daß der Durchmesser der Bohrung in dem Unterbau das Zweifache des Durchmessers des Bohrteils erreicht.

Wenn in einer weiteren Ausgestaltung der selbstbohrenden Schraube nach der Erfindung der Bohrteil ein Bohrplättchen ist, ergeben sich bei der Herstellung der Schraube die Vorteile, die auch die eingangs beschriebene bekannte Schraube aufweist. Es kann nämlich der Bohrteil zusammen mit den Flügeln in einem Arbeitsgang als ein Massenfertigungsteil gefertigt werden. Es ist also kein Fräsen der Bohrspitze und kein separates Anformen der Flügel erforderlich, was eine wirtschaftliche und billige Fertigung der gesamten selbstbohreriden Schraube ermöglicht. Außerdem ist es möglich, ein solches Bohrplättchen bei Schrauben vorzusehen, die aus Leichtmetall, Buntmetall, Stahl, nichtrostendem Stahl oder Kunststoff bestehen.

Wenn in einer weiteren Ausgestaltung der selbstbohrenden Schraube nach der Erfindung der Bohrteil an dem Schaft angeformt ist, eignet sich diese Ausbildung der Schraube für die Herstellung aus einem härtbaren Werkstoff wie beispielsweise einem Kohlenstoffstahl. Vorzugsweise wird der Bohrteil durch Anzwicken an dem Schaft hergestellt und dann gehärtet. Er kann aber auch an einem gesonderten Schaftteil hergestellt und an den Schaft der Schraube, der das Gewinde aufweist oder später erhält, angeschweißt werden.

Wenn in einer weiteren Ausgestaltung der selbstbohrenden Schraube nach der Erfindung der Bohrteil eine Schneidkante hat, die zwei axial versetzte Schneidbereiche hat, läßt sich auf einfache Weise mit dem der Bohrspitze benachbarten Schneidbereich in dem Unterbau ein kleines Loch vorbohren, das dann mit dem axial versetzten zweiten Schneidbereich auf den Durchmesser des Bohrteils aufgeweitet wird.

Wenn in einer weiteren Ausgestaltung der selbstbohrenden Schraube nach der Erfindung die Schneidbereiche in einer durch eine Längsachse der Schraube gehenden Ebene axial gegeneinander versetzt sind, läßt sich der Bohrteil besonders einfach als ein plättchenförmiges Massenfertigungsteil fertigen, z.B. durch Stanzen.

Wenn in einer weiteren Ausgestaltung der selbstbohrenden Schraube nach der Erfindung die axiale Versetzung der Schneidbereiche auf die Dicke des zu durchbohrenden Unterbaus abgestimmt ist, ist sichergestellt, daß die Bohrung in dem Unterbau einen Durchmesser erhält, der auf der gesamten Länge der Bohrung höchstens gleich dem Durchmesser des Bohrteils sein wird, bevor in diese Bohrung das Gegengewinde geschnitten wird.

Wenn in einer weiteren Ausgestaltung der selbstbohrenden Schraube nach der Erfindung der Bohrteil eine in bezug auf die Längsachse der Schraube schräge Schneidkante hat, die sich von der Bohrspitze aus Ober die gesamte Breite des Bohrteils erstreckt, lassen sich mit diesem Bohrteil die gleichen Ergebnisse erzielen wie mit dem Bohrteil in der Ausgestaltung der Erfindung, bei der die Schneidkante zwei axial versetzte Schneidbereiche hat.

Wenn in einer weiteren Ausgestaltung der selbstbohrenden Schraube nach der Erfindung ein axialer Abstand zwischen der Bohrspitze und einem Schnittpunkt der Schneidkante und der Längsachse der Schraube auf die Dicke des zu durchbohrenden Unterbaus abgestimmt ist, ist wiederum gewährleistet, daß die Bohrung in dem Unterbau einen Durchmesser erhält, der auf der gesamten Länge der Bohrung höchstens gleich dem Durchmesser des Bohrteils sein wird, bevor in diese Bohrung das Gegengewinde geschnitten wird.

Ausführungsbeispiele der Erfindung werden im folgenden unter Bezugnahme auf die Zeichnungen näher beschrieben. Es zeigen
- Fig. 1: ein erstes Ausführungsbeispiel einer selbstbohrenden Schraube nach der Erfindung,
- die Fig. 2-9: den Vorgang des Befestigens eines plattenförmigen Gegenstands auf einem Unterbau mittels einer Schraube nach Fig. 1,
- Fig. 10: ein zweites Ausführungsbeispiel der selbstbohrenden Schraube nach der Erfindung,
- die Fig. 11-18: den Vorgang des Befestigens eines plattenförmigen Gegenstands auf einem Unterbau mittels einer Schraube nach Fig. 10, und
- Fig. 19: ein drittes Ausführungsbeispiel der selbstbohrenden Schraube nach der Erfindung.

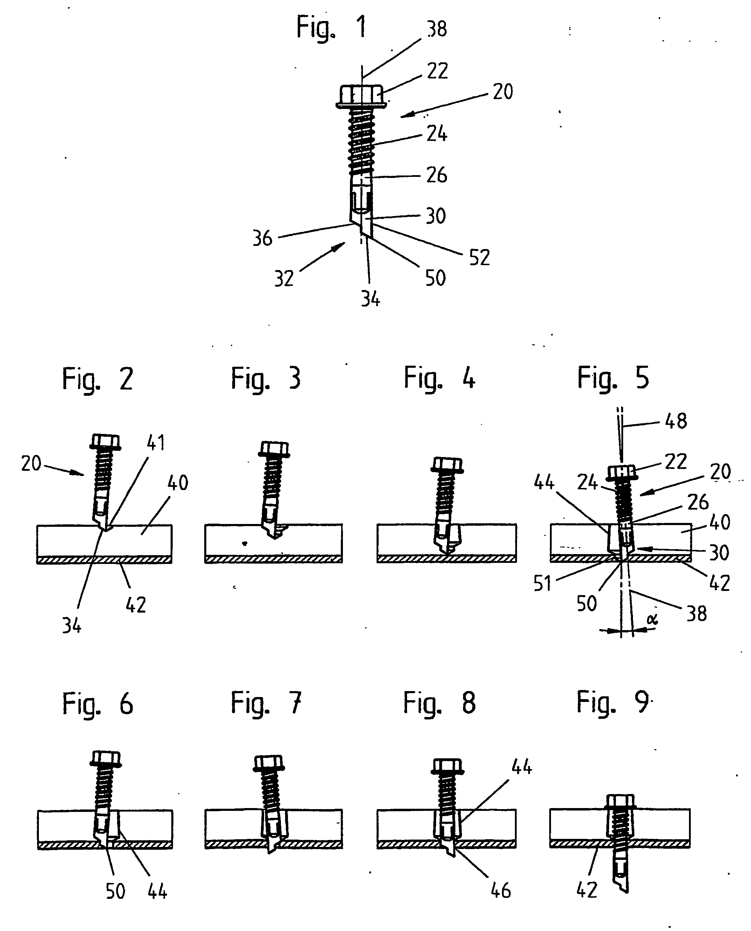

Fig. 1 zeigt ein erstes Ausführungsbeispiel einer selbstbohrenden Schraube nach der Erfindung, die insgesamt mit 20 bezeichnet ist. Die Schraube 20 hat einen Kopf 22, einen mit einem Gewinde 24 versehenen Schaft 26 und einen Bohrteil 30. Der Bohrteil 30 ist in dem Ausführungsbeispiel nach Fig. 1 ein Bohrplättchen, das in einem Schlitz in dem Schaft 26 auf der zu dem Kopf 22 entgegengesetzten Seite des Schaftes befestigt ist. Der Bohrteil 30 hat eine insgesamt mit 32 bezeichnete Schneidkante, die zwei axial versetzte Schneidbereiche 34, 36 hat. Die Schraube 20 hat eine Längsachse 38. Die Schneidbereiche 34, 36 sind in einer durch die Längsachse 38 der Schraube 20 gehenden Ebene axial gegeneinander versetzt. Die axial gegeneinander versetzten Schneidbereiche 34, 36 sind dabei zueinander parallel. Gemäß der Darstellung in den Fig. 2 bis 9 dient die Schraube 20 zur Befestigung eines plattenförmigen Gegenstands 40 auf einem Unterbau 42, der hier aus dünnem Blech (mit einer Dicke von beispielsweise 0,8 - 1,2 mm) besteht. Der plattenförmige Gegenstand 40 ist beispielsweise eine Verkleidungsplatte einer Gebäudeverkleidung. Die axiale Versetzung der Schneidbereiche 34, 36 ist auf die Dicke des zu durchbohrenden Unterbaus 42 abgestimmt. In der Darstellung in den Fig. 2 bis 9 ist die axiale Versetzung etwa gleich der Dicke des Unterbaus 42.

Die vorstehend beschriebene Ausbildung der Schraube 20 dient dem Zweck, in dem plattenförmigen Gegenstand 40 ein Durchgangsloch 44 (Fig. 8) herzustellen, das den mit dem Gewinde 24 versehenen Schaft 26 mit Spiel aufnimmt, und in dem Unterbau 42 eine Bohrung 46 herzustellen, in die das Gewinde 24 des Schaftes 26 ein Gegengewinde schneidet. Zu diesem Zweck hat der Bohrteil 30 eine in bezug auf die Längsachse 38 der Schraube 20 außermittig angeordnete Bohrspitze 50. In dem in den Fig. 1 bis 9 dargestellten Ausführungsbeispiel ist die Bohrspitze 50 an einem radial äußeren Rand 52 des Bohrteils 30 angeordnet. Es ist aber möglich, die Bohrspitze 50 statt dessen in einem Bereich zwischen dem äußeren Rand 52 und der Längsachse 38 der Schraube anzuordnen. In diesem Fall würde das Durchgangsloch 44 im Durchmesser kleiner ausfallen. Aus den folgenden Darlegungen wird das deutlich werden.

Die Wirkungsweise der außermittig angeordneten Bohrspitze 50 bei dem Setzen der selbstbohrenden Schraube 20 wird im folgenden unter Bezugnahme auf die Fig. 2 bis 9 im einzelnen beschrieben.

Ab dem Beginn des Bohrvorganges in dem plattenförmigen Gegenstand 40, Fig. 2, bildet die Bohrspitze 50 eine Zentrierspitze für die Schraube 20. Mit dem axial vorderen Schneidbereich 34, der um eine durch die Bohrspitze 50 gehende vertikale Mittelachse 48 (vgl. Fig. 5) des späteren Durchgangsloches 44 eine Kreisbewegung ausführt, wird ein kleines Loch 41 vorgebohrt. Die Längsachse 38 der Schraube 20 bildet dabei einen Winkel α mit der Mittelachse 48, wie es in Fig. 5 gezeigt ist. Zum Setzender Schraube 20 kann jedes beliebige Eindrehwerkzeug verwendet werden, das in dem Aufnahmeteil für den Kopf 22 ausreichend Spiel hat, um die schräge Anordnung der Schraube 20 zu erlauben, wie sie in den Fig. 2 bis 8 gezeigt ist. Das Eindrehwerkzeug braucht sich lediglich um seine eigene Achse zu drehen. Eine irgendwie geartete Hin- und Herbewegung oder eine Kreisbewegung sollte es nicht ausführen. Es reicht, wenn der Bohrteil 30 eine Kreisbewegung um die Mittelachse 48 ausführt. Mit zunehmendem Bohrfortschritt kommt schließlich die gesamte Schneidkante 32 des Bohrteils 30 zum Einsatz, um das Durchgangsloch 44 in dem plattenförmigen Gegenstand 40 herzustellen, wie es in den Fig. 3 und 4 gezeigt ist. Aufgrund der Kreisbewegung des Bohrteils 30 ist das Durchgangsloch 44 nicht zylindrisch, sondern konisch, wobei es in Richtung zu dem Unterbau 42 im Durchmesser zunimmt. Anschließend dringt die Bohrspitze 50 in den Unterbau 42 ein, so daß sich derselbe Bohrvorgang wie in dem plattenförmigen Gegenstand 40, dessen Beginn in Fig. 2 gezeigt ist, in dem Unterbau 42 wiederholt, Fig. 5 und 6. In Fig. 6 hat die Bohrspitze 50 die Unterseite des Unterbaus 42 erreicht. Das Durchgangsloch 44 ist nun durch die Kreisbewegung des Bohrteils 50 auf seine maximale Größe aufgeweitet worden. In dem gezeigten Ausführungsbeispiel, in welchem die Bohrspitze 50 an dem radial äußeren Rand 52 des Bohrteils 30 angeordnet ist, ist der größte Durchmesser des Durchgangsloches 44 gleich dem Zweifachen des Durchmessers des Bohrteils 30. Wenn die Bohrspitze 50 des Bohrteils 30 den Unterbau 42 durchdringt und an dessen Unterseite zunehmend hervortritt, Fig. 7 und 8, nimmt die Zentrierwirkung der Bohrspitze 50 zunehmend ab. Die Bohrspitze 50 selbst macht dann die Kreisbewegung um die Mittelachse 48 des Durchgangsloches 44 mit, die aber mit zunehmendem Bohrfortschritt abnimmt, weil sich der zwischen der Längsachse 38 der Schraube 20 und der Mittelachse 48 des Durchgangsloches 44 eingeschlossene Winkel α ständig verkleinert, bis der gesamte Bohrteil 30 schließlich in dem Unterbau 42 aufgenommen ist, Fig. 8. In dieser Phase des Bohrfortschrittes fallen die beiden Achsen 38 und 48 zusammen. Der Bohrteil 30 führt nur noch eine Drehbewegung um die Längsachse 38 aus und stellt die Bohrung 46 in dem Unterbau 42 mit einem Durchmesser her, der gleich dem Durchmesser des Bohrteils 30 ist, Fig. 8. Schließlich dringt bei weiterem Vorschub der Schraube 20 das Gewinde 24 des Schaftes 26 in die Bohrung 46 ein, um darin ein Gegengewinde zu schneiden. In diesem Gewinde wird die Schraube 20 schließlich festgezogen, Fig. 9, wobei zu erkennen ist, daß der mit dem Gewinde 24 versehene Schaft 26 der Schraube 20 in dem Durchgangsloch 44 großzügig bemessenes Spiel hat. Dieses ließe sich verkleinern, wenn die Bohrspitze 50 nicht an dem radial äußeren Rand 52 des Bohrteils 30 angeordnet wäre, sondern mehr in Richtung zu der Längsachse 38 der Schraube 20 hin, wie oben dargelegt.

Während des Setzens der Schraube 20 ist ab dem Aufsetzen der Bohrspitze 50 auf dem plattenförmigen Gegenstand 40, Fig. 2, die Schraube so schräg angeordnet, daß eine vertikale Achse, wie z.B. die Mittelachse 48 des Durchgangsloches 44 und der Bohrung 46, einerseits durch die Bohrspitze 50 und andererseits durch den Mittelpunkt der Oberseite des Kopfes 22 der Schraube 20 hindurchgeht, wie es in Fig. 5 gezeigt ist. Dadurch wird sichergestellt, daß sich der Kopf 22 lediglich um die Mittelachse 48 dreht, also keine Hin- und Her- oder Kreisbewegung ausführt, daß hingegen aber der Bohrteil 30 die angestrebte Kreisbewegung um die Mittelachse 48 ausführt, um das Durchgangsloch 44 schließlich so aufzuweiten, wie es ab der Darstellung in Fig. 7 der Fall ist. Wenn die axiale Versetzung zwischen den Schneidbereichen 34 und 36 kleiner gewählt werden würde als die Dicke des Unterbaus 42, würde das vorgebohrte Loch 51 in dem Unterbau zu dem Loch 46 mit einem Durchmesser aufgeweitet werden, der größer wäre als der Durchmesser des Bohrteils 30.

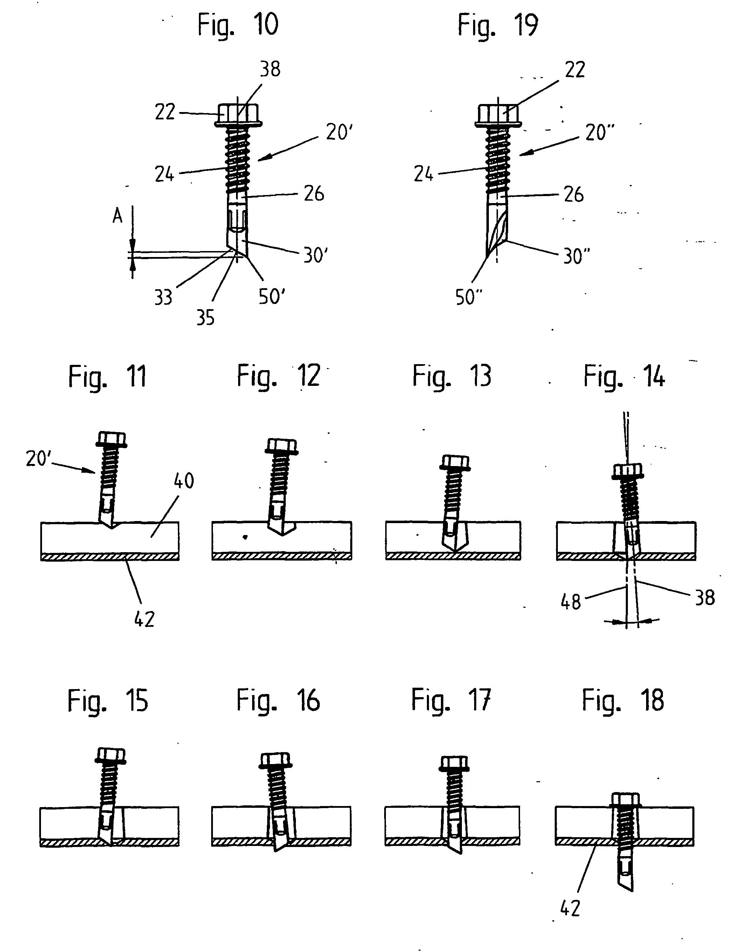

Fig. 10 zeigt ein zweites Ausführungsbeispiel der selbstbohrenden Schraube nach der Erfindung, die hier insgesamt mit 20' bezeichnet ist. Die Schraube 20' unterscheidet sich von der Schraube 20 dadurch, daß sie einen Bohrteil 30' hat, der eine in bezug auf die Längsachse 38 der Schraube 20' schräge Schneidkante 33 hat, die sich von der Bohrspitze 50 aus über die gesamte Breite des Bohrteils erstreckt. Der Bohrteil 30' ist entweder ein an dem Schaft 26 befestigtes Bohrplättchen oder an dem Schaft 26 angeförmt. Mit der Schraube 20' mit dem Bohrteil 30' lassen sich die gleichen Ergebnisse erzielen wie mit der Schraube 20 mit dem Bohrteil 30. Damit das erreicht werden kann, ist ein axialer Abstand A zwischen der Bohrspitze 50 und einem Schnittpunkt 35 der Schneidkante 33 und der Längsachse 38 der Schraube 20' auf die Dicke des zu durchbohrenden Unterbaus 42 abgestimmt. Zweckmäßig wird der axiale Abstand A nach den gleichen Gesichtspunkten gewählt wie die axiale Versetzung der Schneidbereiche 34 und 36 des Bohrteils 30, so daß die Ausführungen dort auch hier gelten.

Der Vorgang des Setzens der Schraube 20' ist in den Fig. 11 bis 18 dargestellt. Die Darstellungen in den Fig. 11 bis 18 entsprechen den Darstellungen in den Fig. 2 bis 9, so daß die Ausführungen zu letzteren auch hier gelten und nicht wiederholt zu werden brauchen.

Fig. 19 zeigt ein drittes Ausführungsbeispiel einer selbstbohrenden Schraube 20" nach der Erfindung. Die Schraube 20" hat einen an dem mit Gewinde versehenen Schaft 26 angezwickten Bohrteil 30". Die Wirkungsweise des Bohrteils 30" der Schraube 20" entspricht der Wirkungsweise des Bohrteils 30 oder 30' der Schrauben 20 bzw. 20', weshalb die dort gemachten Ausführungen auch für das Ausführungsbeispiel nach Fig. 19 gelten.

## Patentansprüche

1. Selbstbohrende Schraube mit einem Bohrteil und einem mit Gewinde versehenen Schaft zur Befestigung eines plattenförmigen Gegenstands auf einem Unterbau, wobei die Schraube so ausgebildet ist, daß sie in dem plattenförmigen Gegenstand ein Durchgangsloch herstellt, das den mit Gewinde versehenen Schaft mit Spiel aufnimmt, und daß sie in dem Unterbau eine Bohrung herstellt, in die das Gewinde des Schaftes ein Gegengewinde schneidet, **dadurch gekennzeichnet, daß** der Bohrteil (30, 30', 30") eine in bezug auf eine Längsachse (38) der Schraube (20, 20', 20") außermittig angeordnete Bohrspitze (50, 50', 50") hat.

2. Selbstbohrende Schraube nach Anspruch 1, **dadurch gekennzeichnet, daß** die Bohrspitze (50, 50', 50") an einem radial äußeren Rand des Bohrteils (30, 30', 30") angeordnet ist.

3. Selbstbohrende Schraube nach Anspruch 1 oder 2, **dadurch gekennzeichnet, daß** der Bohrteil (30) ein Bohrplättchen ist.

4. Selbstbohrende Schraube nach Anspruch 1 oder 2, **dadurch gekennzeichnet, daß** der Bohrteil (30', 30") an dem Schaft (26) angeformt ist.

5. Selbstbohrende Schraube nach einem der Ansprüche 1 bis 4, **dadurch gekennzeichnet, daß** der Bohrteil (30) eine Schneidkante (32) hat, die zwei axial versetzte Schneidbereiche (34, 36) aufweist.

6. Selbstbohrende Schraube nach Anspruch 5, **dadurch gekennzeichnet, daß** die Schneidbereiche (34, 36) in einer durch die Längsachse (38) der Schraube (20) gehenden Ebene axial gegeneinander versetzt sind.

7. Selbstbohrende Schraube nach Anspruch 5 oder 6, **dadurch gekennzeichnet, daß** die axiale Versetzung der Schneidbereiche (34, 36) auf die Dicke des zu durchbohrenden Unterbaus (42) abgestimmt ist.

8. Selbstbohrende Schraube nach einem der Ansprüche 1 bis 4, **dadurch gekennzeichnet, daß** der Bohrteil (30') eine in bezug auf die Längsachse (28) der Schraube (20') schräge Schneidkante (33) hat, die sich von der Bohrspitze (50') aus über die gesamte Breite des Bohrteils (30') erstreckt.

9. Selbstbohrende Schraube nach Anspruch 8, **dadurch gekennzeichnet, daß** ein axialer Abstand (A) zwischen der Bohrspitze (50') und einem Schnittpunkt (35) der Schneidkante (33) und der Längsachse (38) der Schraube (20') auf die Dicke des zu durchbohrenden Unterbaus (42) abgestimmt ist.

## Claims

1. A self-drilling screw, with a drilling member and a shank provided with a screw-thread, for fastening a panel-like object to a substructure, wherein the screw is so formed that it produces in the panel-like object a through-hole which accommodates with clearance the shank provided with a screw-thread, and in that it produces in the substructure a bore in which the screw-thread of the shank cuts a counter-thread, **characterised in that** the drilling member (30,30',30") has a drill tip (50,50',50") disposed off-centre in relation a longitudinal axis (38) of the screw (20,20',20").

2. A self-drilling screw according to Claim 1, **characterised in that** the drill tip (50,50',50") is disposed on a radially outer edge of the drilling member (30,30',30").

3. A self-drilling screw according to Claim 1 or 2, **characterised in that** the drilling member (30) is a laminar drilling tip.

4. A self-drilling screw according to Claim 1 or 2, **characterised in that** the drilling member (30',30") is formed on the shank (26).

5. A self-drilling screw according to any one of Claims 1 to 4, **characterised in that** the drilling member (30) has a cutting edge (32) which has two axially offset cutting zones (34, 36).

6. A self-drilling screw according to Claim 5, **characterised in that** the cutting zones (34,36) are axially offset relative to one another in a plane passing through the longitudinal axis (38) of the screw (20).

7. A self-drilling screw according to Claim 5 or 6, **characterised in that** the axial offsetting of the cutting zones (34,36) is adjusted to the thickness of the substructure (42) to be drilled through.

8. A self-drilling screw according to any one of Claims 1 to 4, **characterised in that** the drilling member (30') has a cutting edge (33) which is inclined relative to the longitudinal axis (28) of the screw (20') and which extends from the drilling tip (50') over the entire width of the drilling member (30').

9. A self-drilling screw according to Claim 8, **characterised in that** an axial distance (A) between the drilling tip (50') and an intersection point (35) of the cutting edge (33) and the longitudinal axis (38) of the screw (20') is matched to the thickness of the substructure (42) to be drilled through.

## Revendications

1. Vis autoperceuse comportant une partie de perçage et une tige munie d'un filetage pour fixer un produit en forme de plaque sur une infrastructure, la vis étant réalisée pour former un trou traversant le produit en forme de plaque recevant avec du jeu la tige munie du filetage et cette vis réalise un perçage dans l'infrastructure dans laquelle le filetage de la tige taille un taraudage,
**caractérisée en ce que**
la partie de perçage (30, 30', 30") présente une pointe de perçage (50, 50', 50") décentrée par rapport à l'axe longitudinal (38) de la vis (20, 20', 20").

2. Vis autoperceuse selon la revendication 1,
**caractérisée en ce que**
la pointe de perçage (50, 50', 50") est prévue au bord radial extérieur de la partie de perçage (30, 30', 30").

3. Vis autoperceuse selon la revendication 1 ou 2,
**caractérisée en ce que**
la partie de perçage (30) comporte une plaquette perforante.

4. Vis autoperceuse selon la revendication 1 ou 2,
**caractérisée en ce que**
la partie de perçage (30', 30") est formée sur la tige (26).

5. Vis autoperceuse selon l'une des revendications 1 à 4,
**caractérisée en ce que**
la partie de perçage (30) présente une arête de coupe (32) ayant deux zones de coupe (34, 36) décalées axialement.

6. Vis autoperceuse selon la revendication 5,
**caractérisée en ce que**
les zones de coupe (34, 36) sont décalées axialement l'une par rapport à l'autre dans un plan passant par l'axe longitudinal (38) de la vis (20).

7. Vis autoperceuse selon la revendication 5 ou 6,
**caractérisée en ce que**
le décalage axial des zones de coupe (34, 36) est défini en fonction de l'épaisseur de l'infrastructure (42) à percer.

8. Vis autoperceuse selon l'une des revendications 1 à 4,
**caractérisée en ce que**
la partie de perçage (30') présente une arête de coupe (33) inclinée par rapport à l'axe longitudinal (28) de la vis (20'), cette arête de coupe s'étendant à partir de la pointe de perçage (50') sur toute la largeur de la partie de perçage (30').

9. Vis autoperceuse selon la revendication 8,
**caractérisée en ce que**
la distance axiale (A) entre la pointe de perçage (50') et le point d'intersection (35) de l'arête de coupe (33) et de l'axe longitudinal (38) de la vis (20') est déterminée en fonction de l'épaisseur de l'infrastructure (42) à percer.
